# DEMANDE DE BREVET EUROPEEN

(11) **EP 2 138 638 A1**
(43) Date de publication de la demande: **30.12.2009**
(21) Numéro de dépôt: 08158834.5
(22) Date de dépôt: 24.06.2008
(51) Int. Cl.: E02D 5/80, E02D 5/54

(54) **Pieu pourvu d'au moins un organe d'ancrage dans le sol.**

(71) Demandeur: Cotillon, Jean-Louis, 37270 Montlouis sur Loire (FR)
(72) Inventeur: Cotillon, Jean-Louis, 37270 Montlouis sur Loire (FR)
(74) Mandataire: Maillet, Alain

(57) **Abrégé**

L'invention se rapporte à un pieu (100) de structure creuse destiné à être enfoncé dans le sol, le pieu (100) comprenant au moins un organe d'ancrage susceptible d'être déplacé dans une position où il fait saillie du pieu à l'issue de son enfoncement.

Selon l'invention, ledit organe d'ancrage (200, 200', 200") est susceptible d'être introduit depuis l'extérieur au travers d'un trou (116) réalisé dans la paroi (112) du pieu (100), la géométrie de l'organe d'ancrage (200, 200', 200") étant telle qu'il ne peut être logé complètement dans le pieu afin d'éviter qu'il ne tombe dedans, l'organe d'ancrage (200, 200', 200") étant mobile, sous l'effet d'un mouvement de coulissement d'un coin (300, 300') à l'intérieur du pieu (100), entre une position où il est escamoté dans le pieu (100) et une position d'ancrage où il fait saillie au travers d'au moins un trou (116, 116'), tout en étant bloqué.

Bien qu'il soit introduit depuis l'extérieur, ce qui facilite son montage, l'organe d'ancrage ne peut tomber à l'intérieur du pieu et peut ainsi être manoeuvré par le coin. Par ailleurs, lorsque l'organe d'ancrage a été manoeuvré par le coin vers sa position d'ancrage, il demeure solidaire du pieu. Le comportement de cet organe d'ancrage peut ainsi être parfaitement maîtrisé lorsque le pieu est enfoncé dans le sol.

## Description

La présente invention concerne un pieu de structure creuse destiné à être enfoncé dans le sol et pourvu d'au moins un organe d'ancrage dans le sol. Pour obtenir un ancrage accru d'un pieu dans le sol, une solution intéressante consiste à équiper le pieu d'organes d'ancrage que l'on fait ressortir de celui-ci, alors qu'il a été préalablement enfoncé, par exemple par battage, à la bonne profondeur.

Un tel pieu est décrit dans le brevet US-A-4 637 757. Ce pieu (1) présente une structure tubulaire creuse. Les organes d'ancrage sont constitués de plaques de section trapézoïdale (11) montées libres à coulissement dans des ouvertures d'axe perpendiculaire à celui du pieu. Le pieu comporte plusieurs niveaux de plaques.

Les plaques (11) sont maintenues en place dans une position non saillante du pieu par des points de soudure (21) pour éviter qu'elles ne ressortent du pieu ou qu'elles ne rentrent dans celui-ci pendant son battage.

Le pieu est enfoncé à une profondeur déterminée en utilisant un marteau. Un tube (41) est ensuite introduit dans le pieu, puis frappé pour, dans un premier temps, fracturer les points de soudure (21) des plaques d'ancrage situées sur une même rangée en les frappant sur leurs faces biseautées, puis dans un second temps, faire ressortir ces plaques d'ancrage des ouvertures en poursuivant la frappe.

Lorsque la première rangée de plaques est suffisamment ressortie, le tube peut redescendre d'un niveau pour agir sur les plaques de la rangée inférieure.

Si l'une des plaques se dessoude pendant le battage du pieu, elle risque de reculer ou de tomber dans le pieu, ce qui va rendre impossible l'utilisation du tube pour faire ressortir les plaques d'ancrage situées en dessous. Dans ce cas, l'ancrage du pieu n'est pas complètement réalisé.

Par ailleurs, les plaques étant libres de coulisser dans leurs logements respectifs dès lors qu'elles sont dessoudées, ces plaques peuvent être expulsées pendant leur frappe par le tube. Rien ne garantit également leur retenue dans le pieu dans le temps et par conséquent l'efficacité de l'ancrage du pieu dans le sol.

Le but de l'invention est donc de proposer un pieu pourvu d'au moins un organe d'ancrage susceptible d'être activé lorsque le pieu est correctement enfoncé et ceci de manière certaine et en le verrouillant.

A cet effet, est proposé un pieu de structure creuse destiné à être enfoncé dans le sol, le pieu comprenant au moins un organe d'ancrage susceptible d'être déplacé dans une position où il fait saillie du pieu à l'issue de son enfoncement.

Selon l'invention, ledit organe d'ancrage est susceptible d'être introduit depuis l'extérieur au travers d'un trou réalisé dans la paroi du pieu, la géométrie de l'organe d'ancrage étant telle qu'il ne peut être logé complètement dans le pieu afin d'éviter qu'il ne tombe dedans, l'organe d'ancrage étant mobile, sous l'effet d'un mouvement de coulissement d'un coin à l'intérieur du pieu, entre une position où il est escamoté dans le pieu et une position d'ancrage où il fait saillie au travers d'au moins un trou, tout en étant bloqué.

Bien qu'il soit introduit depuis l'extérieur, ce qui facilite son montage, l'organe d'ancrage ne peut tomber à l'intérieur du pieu et peut ainsi être manoeuvré par le coin. Par ailleurs, lorsque l'organe d'ancrage a été manoeuvré par le coin vers sa position d'ancrage, il demeure solidaire du pieu. Le comportement de cet organe d'ancrage peut ainsi être parfaitement maîtrisé lorsque le pieu est enfoncé dans le sol.

Selon une caractéristique additionnelle de l'invention, l'organe d'ancrage présente, en vue de profil, une section en L comprenant une première branche de manoeuvre prolongée à une extrémité et de manière perpendiculaire par une seconde branche d'ancrage.

Par cette structure, l'organe d'ancrage peut facilement être manoeuvré par le coin. Par ailleurs, cette géométrie simple rend l'organe d'ancrage peu coûteux à fabriquer.

Dans une variante de réalisation, l'organe d'ancrage présente, en vue de profil, une section en C comprenant deux branches d'ancrage réunies par une branche intermédiaire de manoeuvre. Un ancrage plus important est obtenu.

Selon une caractéristique additionnelle de l'invention, la première branche ou la branche intermédiaire de l'organe d'ancrage est pourvue, contre sa face dorsale, d'un talon destiné à coopérer avec le coin. Ce talon transmet à l'organe d'ancrage la force de battage communiquée au coin.

Selon une caractéristique additionnelle de l'invention, un obturateur est clipé dans le trou pour contraindre l'organe d'ancrage à demeurer dans sa position escamotée.

L'organe d'ancrage peut ainsi demeurer en place pendant le battage du pieu.

Selon une caractéristique additionnelle de l'invention, l'extrémité libre de chaque branche d'ancrage est biseautée pour faciliter la pénétration de celle-ci dans le sol.

Selon une caractéristique additionnelle de l'invention, le pieu présente une section carrée, les trous étant disposés de manière opposée sur la paroi, en étant décalés latéralement, pour permettre respectivement l'introduction de deux organes d'ancrage dans une position où ils se jouxtent. On obtient ainsi un pieu d'une construction symétrique apte à équilibrer les forces de battage des organes d'ancrage.

Selon une caractéristique additionnelle de l'invention, le coin présente une section adaptée à permettre son guidage dans le pieu, le coin comprenant deux barres solidaires terminées respectivement par deux facettes biseautées tournées vers le bas et vers l'intérieur du coin pour venir appuyer respectivement, pendant son coulissement, sur les deux talons des deux organes d'ancrage.

Les deux facettes biseautées viennent appuyer pendant le battage du coin sur les talons des organes d'ancrage et font ressortir du pieu les branches d'ancrage.

Selon une caractéristique additionnelle de l'invention, les barres comportent respectivement des faces frontales qui sont sécantes avec les facettes biseautées, ces faces frontales permettant, en étant appliquées contre les talons, de verrouiller les organes d'ancrage dans leur position d'ancrage, alors que le coin est parvenu dans la partie basse du pieu.

Selon une caractéristique additionnelle de l'invention, le pieu est pourvu de plusieurs niveaux de trous et d'organes d'ancrage correspondants.

Selon une caractéristique additionnelle de l'invention, le pieu est pourvu d'organes d'ancrage rétractables sous l'effet d'un mouvement d'extraction du coin du pieu.

Le retrait du pieu du sol peut alors être envisagé à l'issue de sa période d'utilisation.

Selon une caractéristique additionnelle de l'invention, un repoussoir prolonge de manière oblique la première branche dans une direction opposée à celle de la seconde branche, et le coin est pourvu d'un moyen de manoeuvre du repoussoir pour manoeuvrer l'organe d'ancrage vers sa position escamotée.

Selon une caractéristique additionnelle de l'invention, le moyen de manoeuvre est constitué d'une seconde facette biseautée tournée vers le haut et sécante par une arête avec la première facette biseautée.

Selon une caractéristique additionnelle de l'invention, la seconde facette biseautée est sécante avec une face latérale de la barre correspondante et une rampe est disposée sur chaque face latérale pour agir sur le talon d'un organe d'ancrage d'un niveau supérieur, la rampe étant disposée de manière décalée sur ladite barre pour échapper au repoussoir d'une largeur réduite de cet organe d'ancrage, pendant le mouvement de coulissement du coin.

Selon une caractéristique additionnelle de l'invention, un séparateur est disposé entre deux organes d'ancrage d'un même niveau pour les guider pendant le mouvement de coulissement du coin.

Selon une caractéristique additionnelle de l'invention, le pieu est pourvu d'un extracteur du coin, l'extracteur étant associé à un moyen d'extraction susceptible de tirer sur l'extracteur afin de faire remonter le coin dans le pieu.

Selon une caractéristique additionnelle de l'invention, l'extracteur comprend un tenon solidaire d'une plaque et qui est apte à être engagé par rotation sous deux retours du coin prolongeant perpendiculairement et dans des directions parallèles, les extrémités libres des deux barres.

Selon une caractéristique additionnelle de l'invention, le moyen d'extraction se compose d'une plaque perforée pourvue de butées anti-rotation et qui est destinée à recouvrir l'ouverture du pieu, d'une tige filetée susceptible d'être vissée dans l'extracteur, d'un écrou correspondant, de butées anti-rotation solidaires de l'extracteur et prévues pour coopérer avec celles de la plaque perforée.

Selon une caractéristique additionnelle de l'invention, l'extracteur comprend un profilé métallique boulonné à intervalles réguliers sur la plaque, pour pouvoir régler la longueur de l'extracteur.

Selon une caractéristique additionnelle de l'invention, l'extrémité du pieu est terminée par une pointe rapportée, fabriquée dans un matériau plus résistant que celui du pieu.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

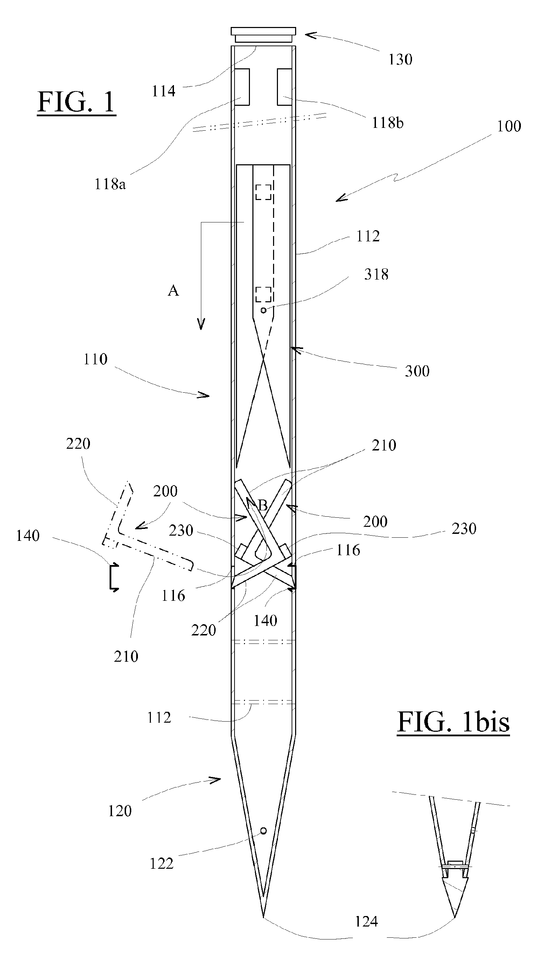

la Fig. 1 représente une vue de face en coupe d'un pieu pourvu d'organes d'ancrage placés dans une position escamotée selon l'invention,
la Fig. 1bis représente une vue de face en coupe de l'extrémité d'un pieu selon l'invention,
la Fig. 2 représente une vue de face en coupe d'un pieu pourvu d'organes d'ancrage en cours de déplacement vers leur position d'ancrage selon l'invention,
la Fig. 3 représente une vue latérale d'un pieu selon l'invention,
la Fig. 4 représente une vue en perspective d'un organe d'ancrage pour un pieu selon l'invention,
la Fig. 5 représente une vue en perspective d'un obturateur pour boucher un trou réalisé dans un pieu pour l'introduction d'un organe d'ancrage selon l'invention,
la Fig. 6a représente une vue en perspective d'un coin pour déplacer, dans un pieu, deux organes d'ancrage vers leur position d'ancrage selon l'invention,
la Fig. 6b représente une vue de dessus d'un pieu et à l'intérieur duquel est enfilé un coin selon l'invention,
la Fig. 7 représente une vue d'un pieu en cours de battage pour permettre son enfoncement dans le sol selon l'invention,
la Fig. 8 représente une vue montrant l'introduction dans un pieu d'un coin destiné à la mise en place des organes d'ancrage vers leur position d'ancrage selon l'invention,
la Fig. 9 représente une vue montrant le battage d'un coin permettant la mise en place des organes d'ancrage vers leur position d'ancrage selon l'invention,
la Fig. 10 représente un pieu sur lequel est fixé un support pour un panneau solaire selon l'invention,
la Fig. 11 représente une vue de face en coupe d'une première variante de réalisation d'un pieu pourvu d'organes d'ancrage disposés sur plusieurs niveaux, et en étant placés dans une position d'ancrage selon l'invention,
la Fig. 12 représente une vue de face en coupe d'un détail d'une seconde variante de réalisation d'un pieu pourvu d'organes d'ancrage présentant une section en C selon l'invention,
la Fig. 13 représente une vue de face en coupe d'une troisième variante de réalisation d'un pieu dont les organes d'ancrage sont rétractables selon l'invention,
la Fig. 14a représente une vue latérale d'un d'organe d'ancrage pour un pieu présenté sur la Fig. 13 selon l'invention,
la Fig. 14b représente une vue dorsale d'un d'organe d'ancrage de niveau inférieur pour le pieu présenté sur la Fig. 13 selon l'invention,
la Fig. 14c représente une vue dorsale d'un d'organe d'ancrage de niveau supérieur pour le pieu présenté sur la Fig. 13 selon l'invention,
la Fig. 15 représente une vue en perspective d'un coin et de son extracteur pour le pieu présenté sur la Fig. 13 selon l'invention,
la Fig. 16 représente une vue de face en coupe de la troisième variante de réalisation d'un pieu dans lequel le mouvement descendant d'un coin entraîne le basculement d'un organe d'ancrage vers sa position d'ancrage selon l'invention,
la Fig. 17 représente une vue de face en coupe de la troisième variante de réalisation d'un pieu dans lequel le coin bloque les organes d'ancrage dans leur position d'ancrage selon l'invention,

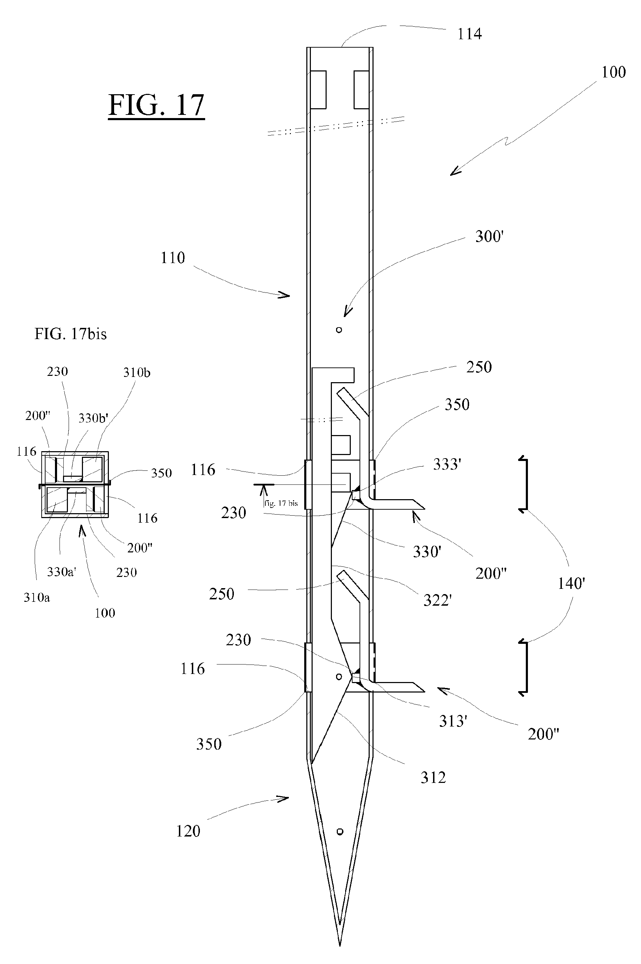

la Fig. 17bis représente une vue en coupe du pieu présenté sur la Fig. 17 et montrant un séparateur pour caler latéralement les organes d'ancrage d'un même niveau selon l'invention,

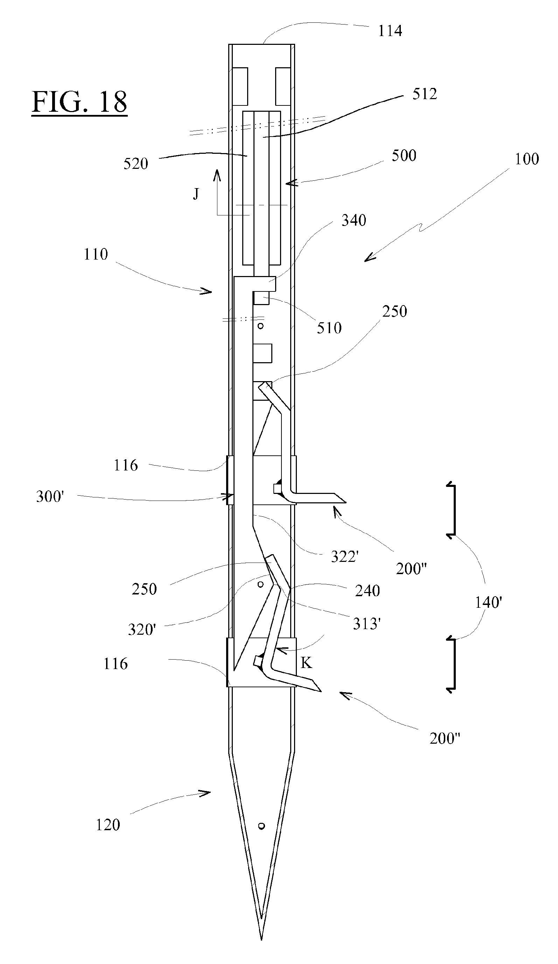

la Fig. 18 représente une vue de face en coupe de la troisième variante de réalisation d'un pieu dans lequel le mouvement ascendant d'un coin entraîne le retour des organes d'ancrage vers leur position escamotée selon l'invention,

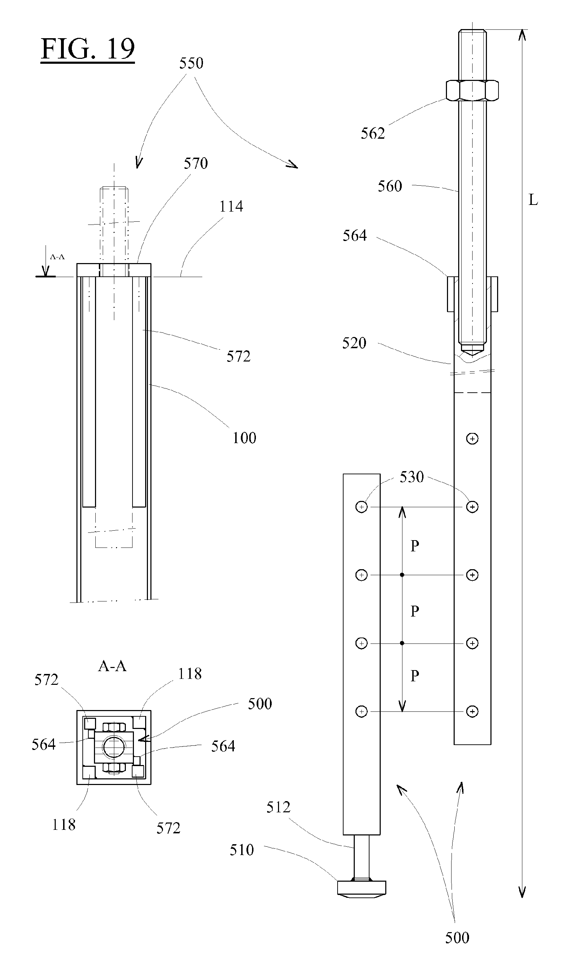

la Fig. 19 représente une vue de face d'un extracteur pour un coin de la troisième variante de réalisation d'un pieu selon l'invention et,

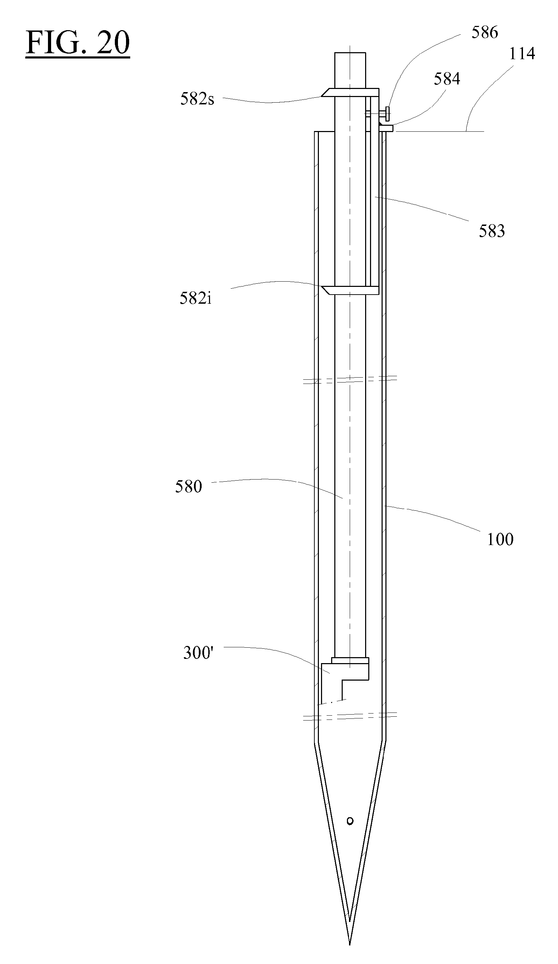

la Fig. 20 représente une vue d'un mécanisme pour régler la longueur d'un extracteur selon l'invention.

Le pieu 100, qui est présenté sur la Fig. 1, est destiné à être enfoncé dans le sol pour tenir un équipement, par exemple un support pour un panneau solaire.

Le pieu 100 est constitué d'un profilé métallique de structure creuse. Le pieu 100 se compose ainsi d'un tronçon principal 110 constitué d'une paroi 112 qui présente sur cette Fig. 1, une section carrée et qui est prolongé par une extrémité effilée 120 destinée à faciliter la pénétration du pieu dans le sol pendant son battage. Cette extrémité effilée 120 est traversée par un orifice 122 destiné à évacuer l'eau de ruissellement susceptible de pénétrer dans le pieu.

Pour pénétrer des sols particulièrement durs, l'extrémité effilée 120 du pieu est de préférence terminée, comme cela apparaît sur les Figs. 1 et 1bis, par une pointe 124 rapportée, fabriquée dans un matériau plus résistant que celui du pieu, tel que de l'acier trempé. Cette pointe 124 est enfilée dans l'extrémité 120 préalablement tronquée du pieu et en prenant appui sur ladite extrémité tronquée. Elle est solidarisée, par exemple par l'intermédiaire d'une goupille.

Le tronçon principal 110 débouche, du côté opposé à l'extrémité effilée 120, au travers d'une ouverture 114 qui peut être refermée par un chapeau 130 destiné à transmettre au pieu l'effort de battage d'un mouton pour permettre son enfoncement dans le sol.

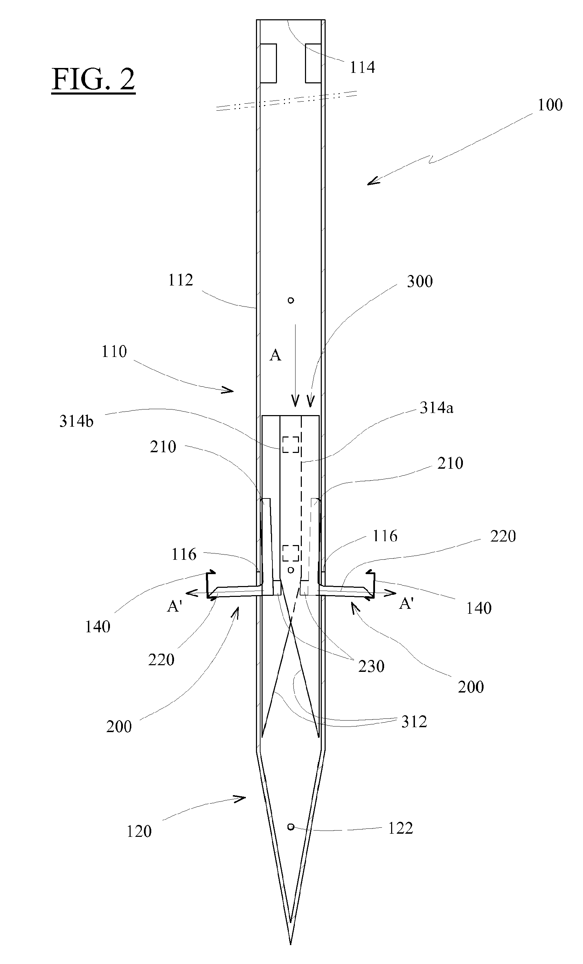

Le pieu 100 est pourvu d'au moins un organe d'ancrage 200 destiné à être activé lorsque le pieu a été enfoncé dans le sol à la profondeur désirée. L'organe d'ancrage 200 peut ainsi être déplacé, par l'intermédiaire d'un coin 300, depuis une position escamotée, visible sur cette Fig. 1, vers une position d'ancrage, visible sur la Fig. 2 où il fait localement saillie du pieu pour renforcer considérablement son ancrage dans le sol.

Sur les Figs. 1 et 2, le pieu 100 est pourvu de deux organes d'ancrage 200 disposés symétriquement. L'effort de traction nécessaire pour ressortir un tel pieu du sol est accru d'un facteur 20 par rapport à un même pieu dépourvu d'organe d'ancrage. Un essai d'arrachage d'un pieu conventionnel et d'un pieu, objet de l'invention, a montré les résultats suivants :

| Type de pieu | Sans organe d'ancrage | Avec deux organes d'ancrage symétriques |
|---|---|---|
| Paramètres/Résultats | | |
| Section du pieu | 30 mm x 30 mm | 30 mm x 30 mm |
| Profondeur d'enfoncement du pieu | 40 cm | 40 cm |
| Force d'arrachement du pieu | 5 daN | 100 daN |

Nous abordons maintenant un point essentiel de l'invention. Sur la Fig. 1, la géométrie de l'organe d'ancrage 200 est telle qu'il ne peut pas être complètement logé à l'intérieur du pieu 100 alors qu'il est introduit au travers d'un trou 116 réalisé dans la paroi 112.

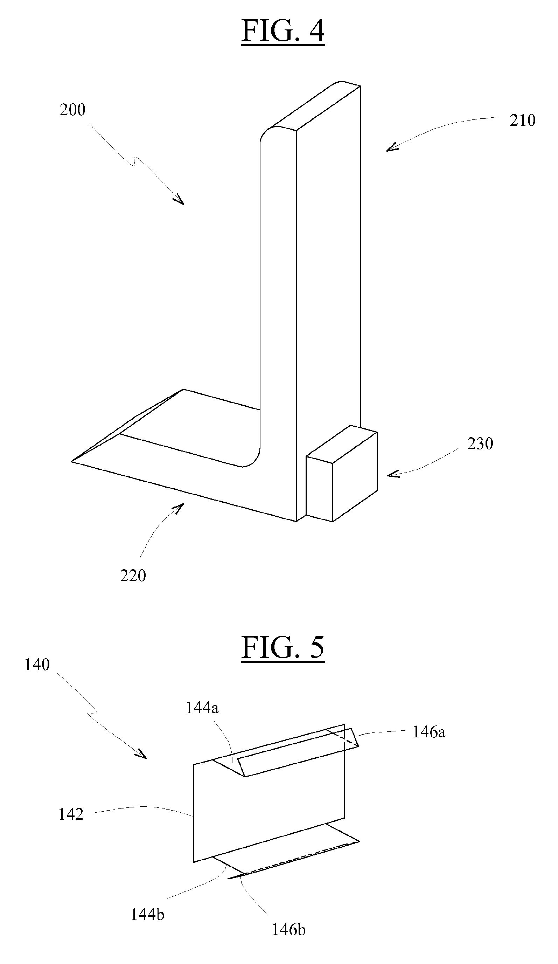

L'organe d'ancrage 200 est constitué, sur la Fig. 4, d'une pièce métallique monobloc présentant, en vue de profil, une section en L. Il se compose ainsi d'une première branche 210 de manoeuvre prolongée à une extrémité et de manière perpendiculaire par une seconde branche 220 d'ancrage. L'extrémité libre de la seconde branche 220 est biseautée pour faciliter la pénétration de celle-ci dans le sol. La première branche 210 est pourvue, contre sa face dorsale et en vis-à-vis de la seconde branche 220, d'un talon 230 destiné à coopérer avec le coin pour que celui-ci puisse transmettre les efforts de battage à l'organe d'ancrage.

Sur la Fig. 1, le coin 300 est destiné à être introduit dans le pieu 100 au travers l'ouverture 114 pour déplacer, par battage, suivant une direction indiquée par la flèche A, les organes d'ancrage 200 vers leur position d'ancrage.

Une goupille 318 traversant le coin 300 et la paroi 112 permet de bloquer le coin 300 pendant le transport du pieu afin qu'il n'agisse pas sur les organes d'ancrage.

Deux trous 116 sont réalisés dans la paroi 112 pour permettre respectivement l'introduction des deux organes d'ancrage 200 dans le pieu 100, depuis l'extérieur. La flèche B montre le sens d'introduction de l'organe d'ancrage situé à gauche sur cette Fig. 1. On introduit la première branche 210 d'un organe d'ancrage 200 dans un trou 116, de manière à ce qu'elle puisse être tournée en direction de l'ouverture 114.

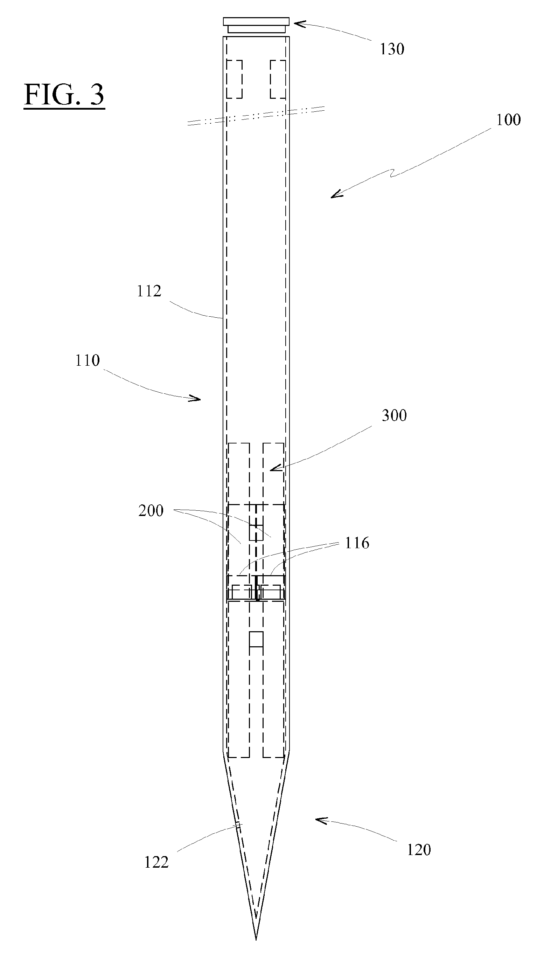

Ces deux trous 116 sont situés de manière opposée sur un même niveau, c'est-à-dire qu'ils sont réalisés au travers de deux faces opposées du pieu 100. Sur la vue latérale du pieu visible sur la Fig. 3, ces deux trous 116 possèdent une section carrée ou encore rectangulaire et sont décalés latéralement l'un vis-à-vis de l'autre pour que les deux organes d'ancrage 200 puissent être situés côte à côte à l'issue de leur introduction.

Dans sa position escamotée visible sur la Fig. 1, l'organe d'ancrage 200 repose par sa seconde branche 220 sur la face basse du trou 116 correspondant ce qui lui permet de demeurer prisonnier dans ce trou 116, alors que son talon 230 et l'extrémité libre de la première branche 210 sont en contact avec les faces internes de la paroi 112 du pieu 100.

Un obturateur 140 est clipé dans le trou 116 pour contraindre l'organe d'ancrage 200 à demeurer dans sa position escamotée. Dans sa position escamotée, l'organe d'ancrage 200 ne peut donc pas tomber à l'intérieur du pieu et il demeure ainsi en place. Par ailleurs, les organes d'ancrage étant escamotés, le pieu 100 peut être enfoncé dans le sol comme un pieu conventionnel.

Sur la Fig. 5, l'obturateur 140 est fabriqué dans une feuille de métal découpée et pliée. Il comporte une face principale 142 d'obturation d'un trou, prolongée perpendiculairement de part et d'autre par deux facettes 144a, 144b de plus faible largeur, elles-mêmes prolongées par deux autres facettes 146a, 146b repliées vers l'extérieur en formant un angle aigu avec les deux facettes 144 afin qu'elles puissent prendre appui contre la face interne de la paroi du pieu. Un obturateur 140 clipé dans un trou 116 est visible sur le côté droit du pieu 100 sur la Fig. 1.

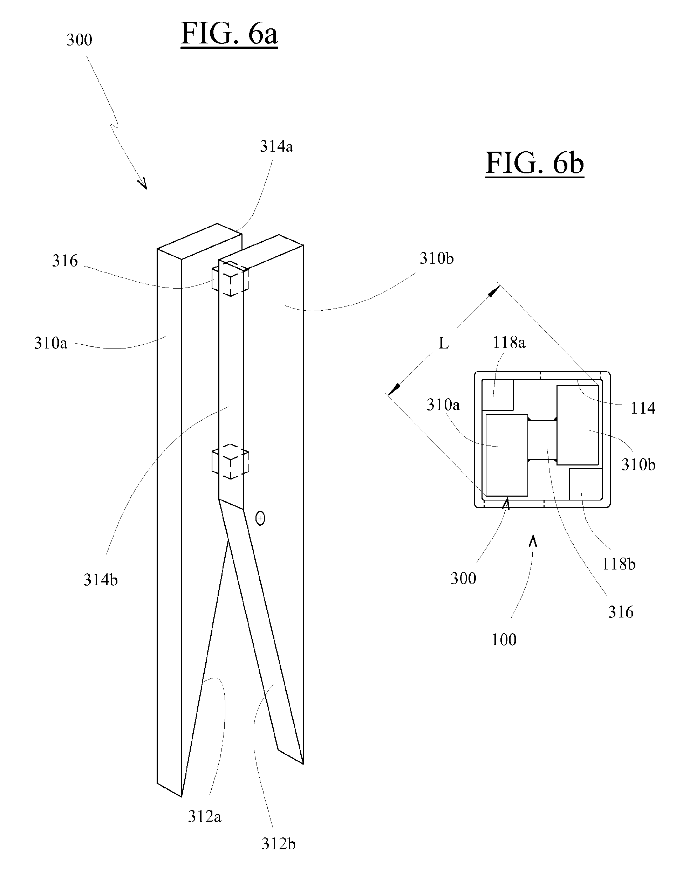

Sur la Fig. 6a, le coin 300 se présente sous la forme d'un profilé métallique de section adaptée pour être introduit dans le pieu. Il se compose de deux barres 310a 310b de section rectangulaire solidarisées l'une à l'autre, par exemple par l'intermédiaire de plots 316 soudés entre leurs deux faces internes, et en étant décalées latéralement.

Sur la Fig. 6b, la longueur L de la plus grande diagonale de la section du coin 300 est un peu plus courte que la diagonale de la section intérieure du pieu 100 si bien qu'il peut coulisser dans celui-ci en étant guidé en translation.

On remarquera également sur cette Fig. 6b, la présence de deux cales 118a, 118b solidarisées dans deux encoignures opposées du pieu, au niveau de son ouverture 114, pour permettre l'introduction du coin suivant une orientation convenable. Ces cales sont également visibles sur la Fig. 1.

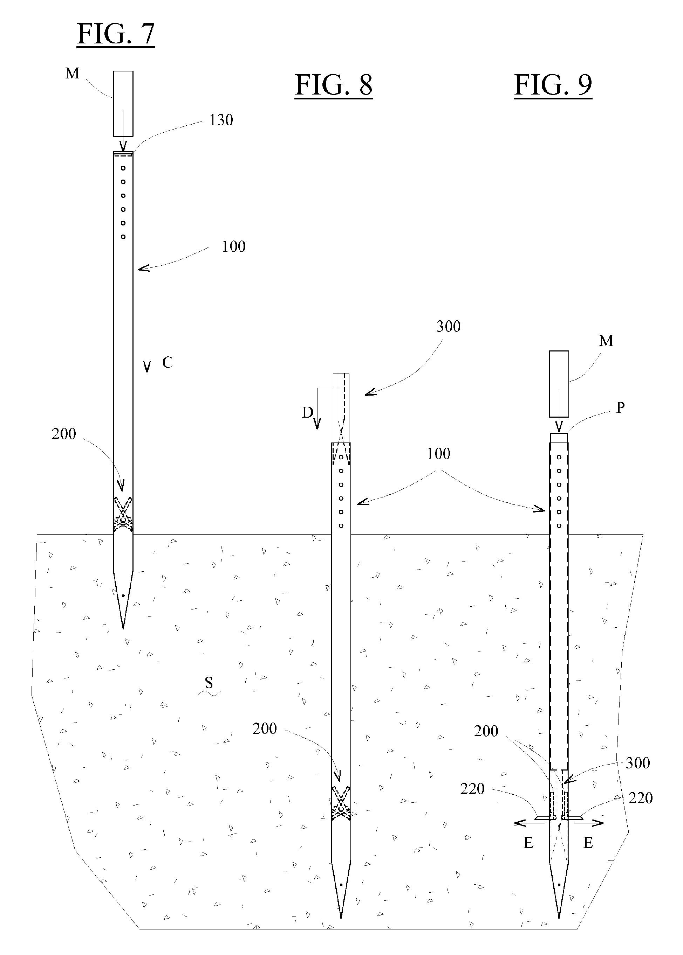

Sur la Fig. 6a, chaque barre 310 est terminée par une face biseautée 312 tournée vers l'intérieur du coin 300. Sur la Fig. 2, ces faces biseautées 312 viennent, pendant le mouvement descendant du coin 300, indiqué par la flèche A, appuyer en même temps sur les talons 230 des organes d'ancrage 200. Par réaction, les extrémités libres des premières branches 210 prennent appui contre les faces internes de la paroi 112 du pieu 100 forçant ainsi les secondes branches 220 à sortir au travers de leurs trous 116 correspondants et les amener vers leur position d'ancrage comme le montrent les flèches A'. Un pieu 100 avec ses organes d'ancrage 200 placés dans leur position d'ancrage est montré sur la Fig. 9.

On remarquera sur la Fig. 2, que les talons 230 permettent de recevoir la totalité de la force de frappe des coins 300, ce qui permet au regard de leur position au pied des organes d'ancrage de faire basculer ceux-ci dans une position où leurs premières branches sont disposées de manière quasi parallèle, si bien que leurs secondes branches 220 sont complètement ressorties pour procurer un ancrage efficace dans le sol au pieu.

On remarquera que les obturateurs 140 sont extraits des trous 116 par les extrémités des secondes branches 220, pendant le déplacement des organes d'ancrage 200 vers leur position d'ancrage.

Sur la Fig. 6a, les deux barres 310a, 310b comportent respectivement deux faces frontales 314a, 314b qui sont sécantes avec les facettes biseautées 312a, 312b. Sur la Fig. 2, ces faces frontales 314 permettent, en étant appliquées contre les talons 230 de verrouiller les organes d'ancrage 200 dans leur position d'ancrage, alors que le coin est parvenu en butée dans la partie basse du pieu.

Dans une variante de construction, non représentée, d'un pieu de construction économique incorporant un seul organe d'ancrage, le coin peut être fabriqué dans une seule barre, de section adaptée pour être introduit dans le pieu avec faculté de coulissement, et terminé par une facette biseautée.

La mise en oeuvre du pieu de l'invention se présente de la manière suivante.

On retire la goupille 318 du pieu 100.

Sur la Fig. 7, on enfonce dans le sol S, un pieu 100 recouvert de son chapeau 130, en utilisant un mouton M de battage. L'enfoncement du pieu est indiqué par la flèche C.

Sur la Fig. 8, lorsque le pieu est enfoncé à la bonne profondeur, on retire le chapeau 130 et on laisse choir dans le pieu, un coin 300 comme le montre la flèche D. Sur la Fig. 9, on introduit un tube de frappe P destiné à l'aide d'un mouton M, à battre le coin 300 pour que les secondes branches 220 puissent ressortir du pieu 100 et prendre ancrage dans le sol S comme l'indiquent les flèches E. Le tube de frappe P peut être revêtu d'un marquage, non représenté, destiné à déterminer la position du coin dans le pieu pour savoir si les organes d'ancrage 200 ont bien atteint leur position d'ancrage. Le pieu 100 est alors définitivement ancré dans le sol. On retire ensuite le tube de frappe P.

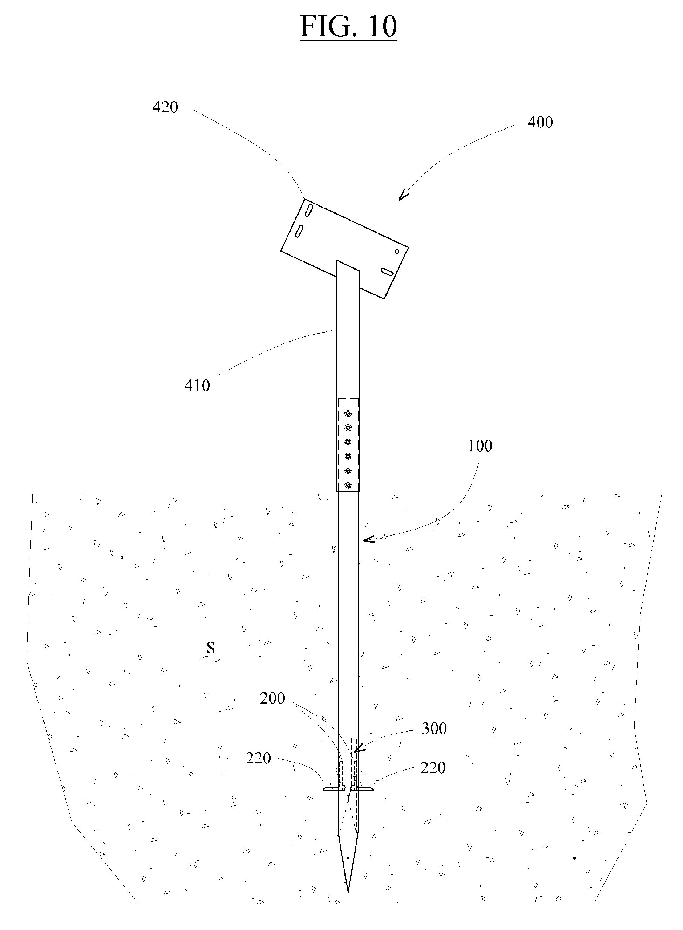

Sur la Fig. 10, le pieu 100 est utilisé pour porter un support 400 pour un panneau solaire. Ce support 400 est constitué d'un tronçon tubulaire 410 de section carrée, emmanché et boulonné sur l'extrémité libre du pieu 100. Sur l'extrémité libre de ce tronçon 410 est fixée, dans un plan médian à ce tronçon, une plaque 420 destinée à recevoir des panneaux solaires.

Une autre application visée par l'invention consiste à utiliser les pieux pour réaliser l'ancrage de bâtiments provisoires.

Le pieu 100 de l'invention permet d'accroître ses capacités d'ancrage dans le sol par rapport à un pieu conventionnel.

Il est d'une construction simple et les constituants additionnels qu'il incorpore par rapport à un pieu conventionnel (organes d'ancrage, coin) sont peu coûteux à fabriquer.

La pose des organes d'ancrage est réalisée depuis l'extérieur du pieu.

Le déplacement des organes d'ancrage vers leur position d'ancrage est réalisé de manière certaine.

L'opérateur peut s'assurer que les organes d'ancrage sont correctement ressortis. Ces organes d'ancrage demeurent par ailleurs parfaitement verrouillés dans le temps.

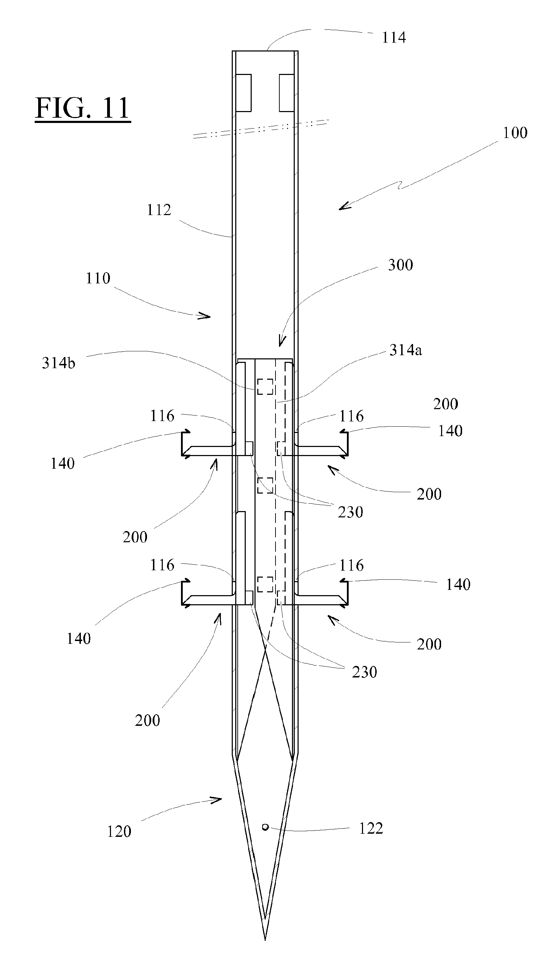

Dans une première variante de réalisation du pieu présentée sur la Fig. 11, ce pieu 100 est pourvu de plusieurs niveaux d'organes d'ancrage 200, ici au nombre de deux, pour accroître encore la capacité d'ancrage de ce pieu dans le sol. Dans cette construction, la longueur des deux faces frontales 314a et 314b est telle qu'elles recouvrent les talons 230 des organes d'ancrage des différents niveaux.

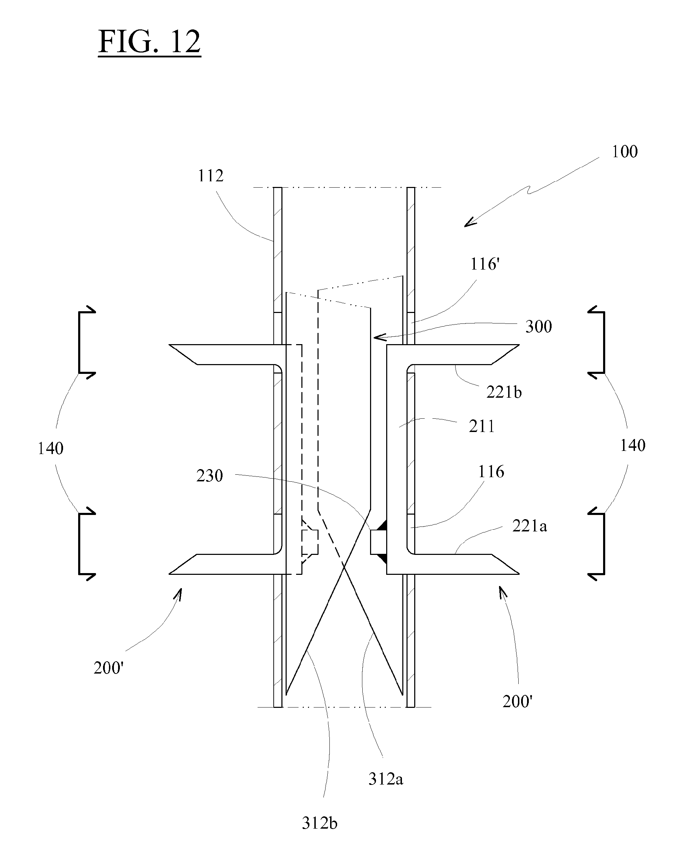

Dans une seconde variante de réalisation représentée sur la Fig. 12, le pieu 100 est pourvu de deux organes d'ancrage 200' disposés symétriquement et qui sont d'une construction différente. Chaque organe d'ancrage 200', toujours d'une structure monobloc, présente une section en C comprenant deux branches d'ancrage 221a, 221b faisant saillie, dans sa position d'ancrage, au travers de deux trous 116, 116' réalisés dans la paroi du pieu 100, ces deux branches étant réunies par une branche intermédiaire de manoeuvre 211 supportant le talon 230 destiné à coopérer avec la facette biseautée 312b correspondante du coin 300. Le talon 230 est situé en partie basse de la branche intermédiaire 211. L'organe d'ancrage 200' est introduit dans le pieu 100 au travers du trou 116. Un tel organe procure un ancrage plus important qu'un ancrage de section en L.

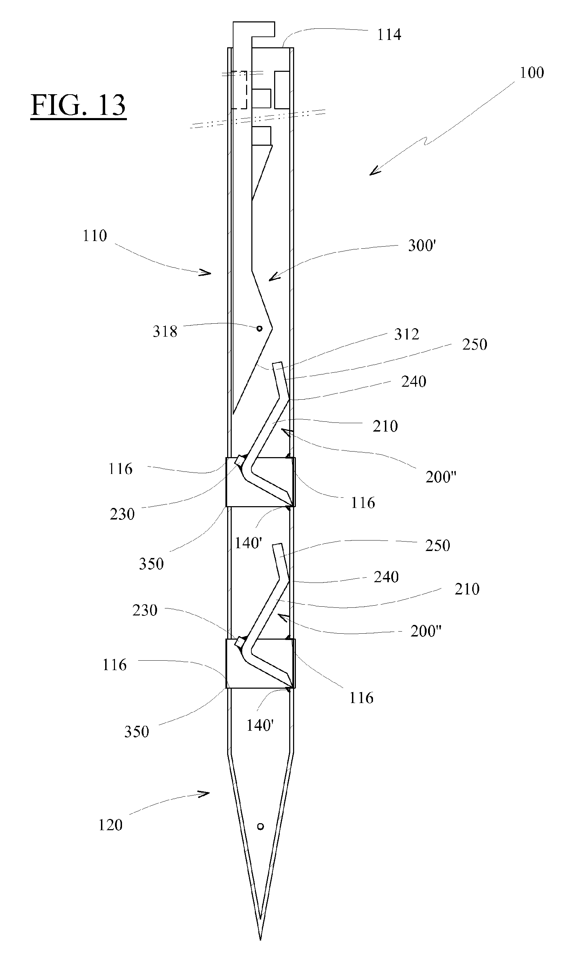

Dans une troisième variante de réalisation du pieu présentée sur la Fig. 13, ce pieu 100 est pourvu d'organes d'ancrage 200" rétractables susceptibles d'être manoeuvrés dans une position de rétractation où ils sont escamotés afin de permettre l'extraction du pieu du sol. Cette faculté de retrait des pieux est intéressante lorsque l'on souhaite rendre le terrain tel qu'il était auparavant, par exemple à l'issue d'un bail.

Le pieu est présenté sur cette Fig. 13, dans une version comprenant deux niveaux d'organes d'ancrage 200". Pour des raisons de clarté du dessin, seuls les organes d'ancrage situés d'un même côté, et ici sur le côté droit, sont représentés.

Chaque organe d'ancrage 200" est introduit dans le pieu 100 au travers d'un trou 116 comme dans sa version non rétractable. Un obturateur 140' ferme le trou 116 pour maintenir l'organe d'ancrage 200" dans cette position.

Le coin 300' est ici prévu pour, outre faire sortir et maintenir les organes d'ancrage dans leur position d'ancrage, les ramener vers leur position escamotée en exerçant sur celui-ci une simple opération de traction décrite dans le détail ci-après.

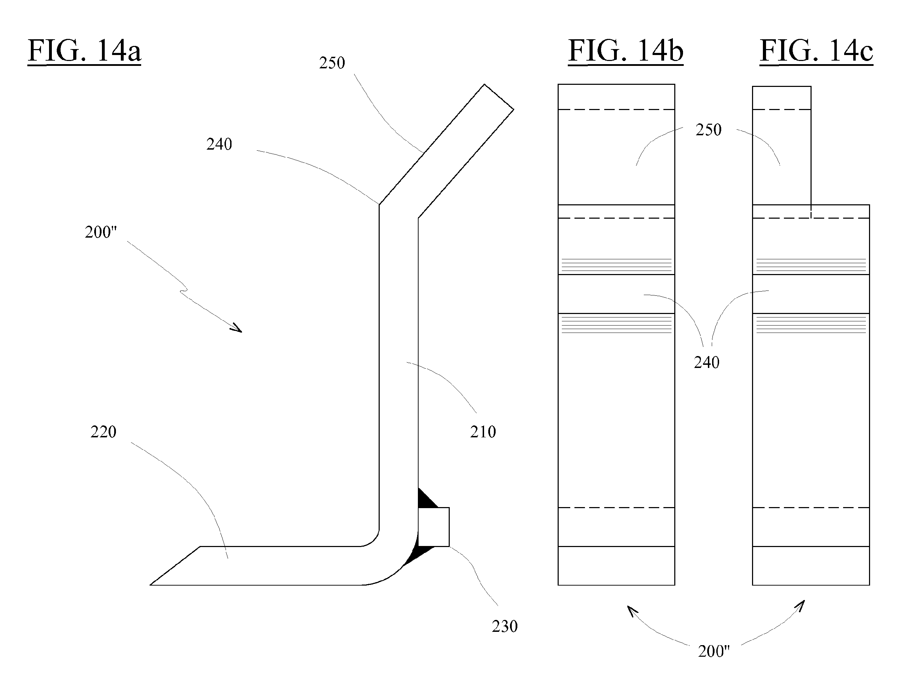

Sur les Figs. 14, l'organe d'ancrage 200" reprend la structure de l'organe d'ancrage présenté sur la Fig. 4. Il est cependant pourvu d'un repoussoir 250 qui prolonge de manière oblique la première branche 210 et dans une direction opposée à celle de la seconde branche 220. Ce repoussoir 250 est destiné, en coopération avec un mouvement de coulissement ascendant du coin, à faire basculer l'organe d'ancrage 200" de sa position d'ancrage vers sa position escamotée.

Une arête 240 est formée à l'intersection de la seconde branche 220 et du repoussoir 250 pour prendre appui contre la face interne de la paroi du pieu pendant le déplacement entre la position d'ancrage et la position escamotée de l'organe d'ancrage et inversement.

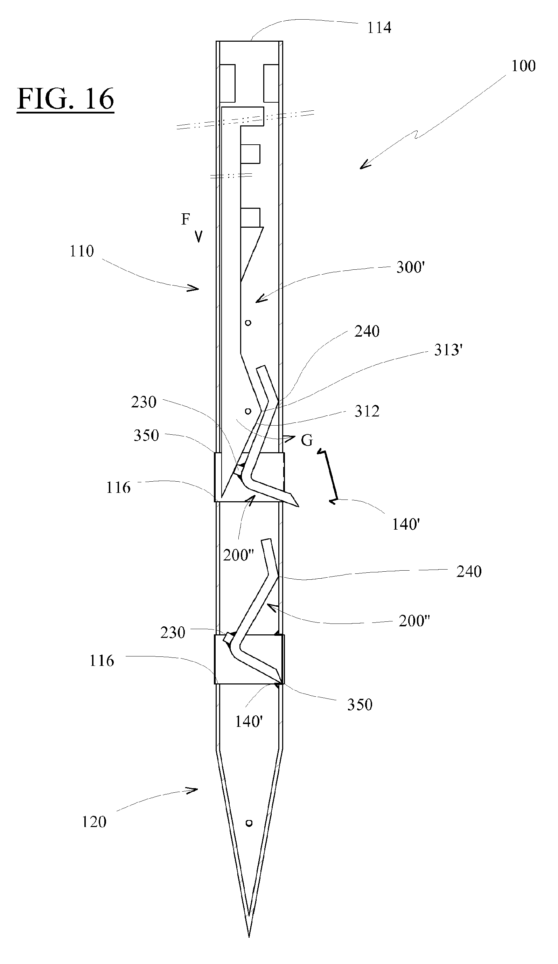

L'organe d'ancrage 200" du niveau supérieur en cours de basculement sous l'effet du coulissement du coin 300', matérialisés par les flèches F et G, est présenté sur la Fig. 16.

Sur la Fig. 14b, le repoussoir 250 occupe toute la largeur d'un organe d'ancrage 200" destiné à être monté dans le niveau inférieur.

Sur la Fig. 14c, la largeur du repoussoir 250 d'un organe d'ancrage 200" destiné à être monté dans le niveau supérieur est réduite et il est positionné d'un bord.

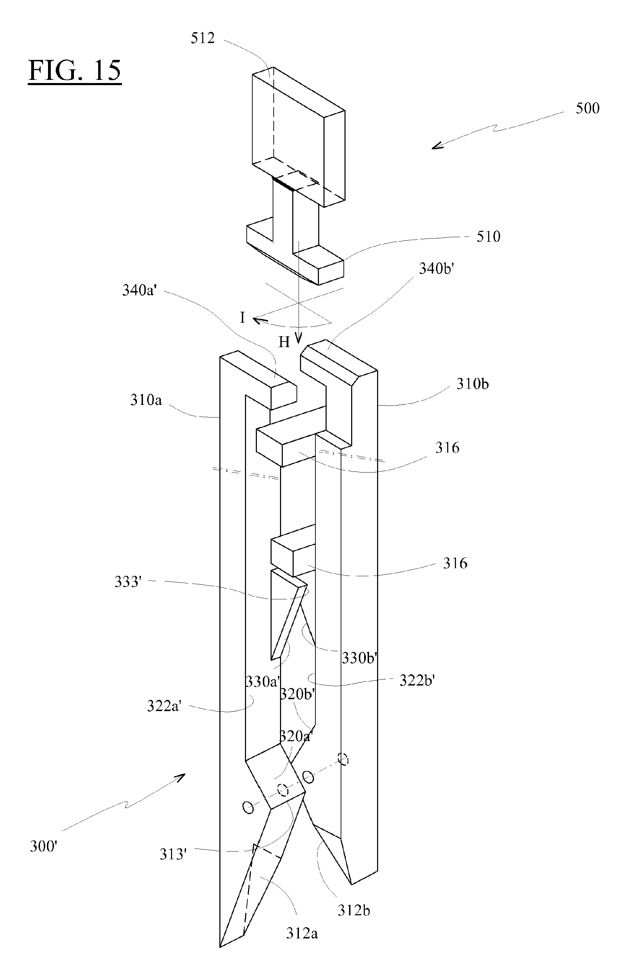

Sur la Fig. 15, le coin 300' se compose, là encore, de deux barres 310a, 310b de section rectangulaire solidarisées l'une à l'autre, par exemple par l'intermédiaire de plots 316 soudés, et en étant décalées latéralement.

Chaque barre 310 est terminée par une facette biseautée 312 prévue pour agir successivement sur le talon de l'organe d'ancrage correspondant du niveau supérieur puis du niveau inférieur afin de le faire basculer autour de son arête pour l'amener vers sa position d'ancrage pendant le mouvement de descente du coin; voir à ce propos la Fig. 16. Cette facette biseautée 312 est sécante par une arête 313' avec une seconde facette biseautée 320', tournée vers le haut, qui est elle-même sécante avec une face latérale 322' de la barre 310 correspondante.

Une rampe 330' est disposée sur chaque face latérale 322' pour agir sur le talon de l'organe d'ancrage du niveau supérieur. Cette rampe est délimitée en partie haute par une arête 333'. La pente de cette rampe est similaire à celle de la facette biseautée 312 et agit de la même manière que celle-ci.

On remarquera que, passé un certain angle d'inclinaison des organes d'ancrage, ce sont les arêtes 313' et 333' qui prennent le pas pour agir contre la face dorsale des premières branches afin de poursuivre le mouvement de basculement des organes d'ancrage 200" vers leur position d'ancrage. Cette situation est compréhensible sur la Fig. 16, si on imagine le coin 300' descendu plus bas.

Sur la Fig. 17, lorsque chaque organe d'ancrage 200" est basculé vers sa position d'ancrage, il y est maintenu par les arêtes 313' et 333' ainsi que par la face latérale 322' du coin 300' qui font face respectivement aux talons 230 et aux repoussoirs 250 des organes d'ancrage 200".

Pour que la rampe 330' puisse descendre et être placée en vis-à-vis du talon 230 de l'organe d'ancrage 200" du niveau supérieur, elle est disposée de manière décalée sur la barre 310, cela est visible sur la Fig. 15, pour échapper au repoussoir 250 de largeur réduite de cet organe d'ancrage 200" et qui est présenté en vue dorsale sur la Fig. 14c.

On remarquera en particulier sur les Figs. 17 et 17bis, la présence de séparateurs 350 destinés à guider latéralement les organes d'ancrage 200' d'un même niveau pendant leur déplacement sous l'effet du coulissement du coin 300'. Chaque séparateur 350 est constitué d'une plaque de tôle fabriquée en acier inoxydable pour demeurer opérationnel dans le temps. Deux rebords opposés de cette plaque sont repliés à 90 ° dans des directions opposées pour permettre son assujettissement dans deux trous 116 d'un même niveau. Le séparateur 350 est maintenu en place par la présence des organes d'ancrage 200" alors que les barres 310a et 310b du coin peuvent coulisser de part et d'autre du séparateur.

A l'issue de l'utilisation du pieu, celui-ci peut être retiré du sol. Il convient pour cela de faire rentrer les organes d'ancrage dans le pieu en exerçant une traction sur le coin 300', puis de sortir le pieu du sol.

Sur la Fig. 15, un extracteur 500 est placé au-dessus du coin 300'. Cet extracteur est destiné à être déposé sur le coin 300'comme le suggère la flèche H, pour ensuite être tourné suivant la flèche I, afin de le rendre solidaire dudit coin, pour pouvoir l'extraire du pieu en exerçant une traction sur l'extracteur.

L'extracteur 500 comprend une plaque 512 terminée par un tenon 510 dont les deux extrémités libres peuvent être retenues sous deux retours 340a', 340b' prolongeant perpendiculairement et dans des directions parallèles les extrémités libres des deux barres 310a et 310b. Ainsi, en tournant d'un quart de tour, comme le montre la flèche I lorsque le tenon 510 est placé entre les deux retours 340a' et 340b', on accroche l'extracteur 500 sur le coin 300'.

Sur la Fig. 19, l'extracteur 500 est avantageusement constitué d'un profilé métallique 520 rainuré dans sa partie inférieure, pour recevoir et fixer dans cette rainure, par exemple par boulonnage, la plaque centrale 512 portant le tenon 510. Des perçages 530 traversent à intervalles R réguliers le profilé métallique 520 ainsi que la plaque centrale 512 pour les assembler mutuellement suivant une longueur L particulière de l'extracteur choisie parmi plusieurs longueurs possibles.

Sur la Fig. 18, une traction, matérialisée par la flèche J, est exercée de bas en haut sur l'extracteur 500 pour faire sortir le coin 300' du pieu 100. La seconde facette biseautée 320', en agissant sur les repoussoirs 250, fait, dans un premier temps, basculer l'organe d'ancrage 200" du niveau inférieur autour de l'arête 240 en direction de sa position escamotée comme le montre la flèche K, puis, dans un second temps, fait basculer de la même façon l'organe d'ancrage 200" du niveau supérieur. Les organes d'ancrage étant rétractés, on peut ainsi beaucoup plus facilement faire sortir le pieu, par exemple à l'aide d'un engin de levage.

Sur la Fig. 19, l'extracteur 500 est associé à un moyen d'extraction 550 susceptible de tirer sur l'extracteur 500 afin de le faire remonter dans le pieu.

Ce moyen d'extraction 550 se compose d'une tige filetée 560 susceptible d'être vissée dans un taraudage réalisé dans l'extrémité libre du profilé métallique 520, d'un écrou 562 correspondant, de butées anti rotation 564 solidaires du profilé métallique 520. Le moyen d'extraction 550 comporte encore une plaque perforée 570 pour permettre le passage de la tige filetée 560 et qui est destinée à recouvrir l'ouverture 114 du pieu 100, la plaque perforée 570 étant pourvue de butées anti-rotation 572 adaptées à coopérer avec les butées anti-rotation 564 pour empêcher l'extracteur 500 de tourner pendant sa remontée. On remarquera que la présence des cales 118 présentes dans le pieu au niveau de son ouverture oblige l'extracteur 500, et par conséquent, le tenon 510 à être orienté convenablement pour saisir le coin.

On fait descendre l'extracteur 500 pourvu de sa tige filetée 560 dans le pieu 100 jusqu'à ce qu'il atteigne le coin et l'on fait tourner l'extracteur 500 pour que le tenon 510 puisse, comme cela est montré sur la Fig. 18, être bloqué sous les retours 340'. On place la plaque perforée 570 sur l'ouverture 114 du pieu avec ses butées anti-rotation 572 placées à l'intérieur de celui-ci pour, en s'opposant aux butées anti-rotation 564 empêcher le profilé métallique 520 et par conséquent le tenon 510 de tourner pendant que l'on tire sur le coin 300'. On visse l'écrou 562 sur la tige filetée 560 et que l'on serre à l'aide d'une clé pour forcer le coin à remonter afin qu'il puisse rétracter les organes d'ancrage.

Lorsque les pieux ont été enfoncés dans le sol, il arrive parfois que l'on soit obligé de raccourcir certains d'entre eux en coupant une partie du pieu faisant saillie du sol pour les adapter à l'équipement qu'ils devront supporter. Cela est vrai, par exemple lorsque le pieu refuse de s'enfoncer à la profondeur voulue dans un sol particulièrement dur.

En connaissant la distance séparant le coin de l'ouverture du pieu, on peut régler la longueur de l'extracteur pour positionner correctement la tige filetée.

Pour faciliter cette opération, on peut utiliser, comme cela est présenté sur la Fig. 20, un mécanisme de réglage enfilé sur un tube 580 qui est inséré dans le pieu pour qu'il puisse reposer sur le coin 300'. Le mécanisme de réglage est constitué d'une bride supérieure 582s, d'une bride inférieure 582i montées à coulissement sur le tube, et qui sont réunies par une barre 583, d'une butée 584 solidaire de la barre pour reposer sur l'ouverture 114 du pieu 100 et d'une vis de blocage 586 du mécanisme sur le tube 580. En mesurant la distance séparant le pied du tube 580 de la bride supérieure 582s, on peut déterminer, comme cela apparaît sur la Fig. 19, la longueur L adéquate de l'ensemble constitué par le profilé 520, la plaque 512 tenant le tenon 510, et la tige filetée 560. On peut par conséquent régler convenablement l'extracteur.

## Revendications

1. Pieu (100) de structure creuse destiné à être enfoncé dans le sol, le pieu (100) comprenant au moins un organe d'ancrage susceptible d'être déplacé dans une position où il fait saillie du pieu à l'issue de son enfoncement, **caractérisé en ce que** ledit organe d'ancrage (200, 200', 200") est susceptible d'être introduit depuis l'extérieur au travers d'un trou (116) réalisé dans la paroi (112) du pieu (100), la géométrie de l'organe d'ancrage (200, 200', 200") étant telle qu'il ne peut être logé complètement dans le pieu afin d'éviter qu'il ne tombe dedans, l'organe d'ancrage (200, 200', 200") étant mobile, sous l'effet d'un mouvement de coulissement d'un coin (300, 300') à l'intérieur du pieu (100), entre une position où il est escamoté dans le pieu (100) et une position d'ancrage où il fait saillie au travers d'au moins un trou (116, 116'), tout en étant bloqué.

2. Pieu (100) selon la revendication 1, **caractérisé en ce que** l'organe d'ancrage (200, 200") présente, en vue de profil, une section en L comprenant une première branche (210) de manoeuvre prolongée à une extrémité et de manière perpendiculaire par une seconde branche (220) d'ancrage.

3. Pieu (100) selon la revendication 1, **caractérisé en ce que** l'organe d'ancrage (200') présente, en vue de profil, une section en C comprenant deux branches d'ancrage (221a, 221b) réunies par une branche intermédiaire de manoeuvre (211).

4. Pieu (100) selon la revendication 2 ou 3, **caractérisé en ce que** la première branche (210) ou la branche intermédiaire (211) est pourvue, contre sa face dorsale, d'un talon (230) destiné à coopérer avec le coin (300, 300').

5. Pieu (100) selon l'une quelconque des revendications précédentes, **caractérisé en ce qu'**un obturateur (140, 140') est clipé dans le trou (116, 116') pour contraindre l'organe d'ancrage (200, 200', 200") à demeurer dans sa position escamotée.

6. Pieu (100) selon l'une quelconque des revendications 2 à 5, **caractérisé en ce que** l'extrémité libre de chaque branche d'ancrage (220 ; 221a, 221b) est biseautée pour faciliter la pénétration de celles-ci dans le sol.

7. Pieu (100) selon l'une quelconque des revendications précédentes, **caractérisé en ce qu'**il présente une section carrée, les trous (116, 116') étant disposés de manière opposée sur la paroi (112), en étant décalés latéralement, pour permettre respectivement l'introduction de deux organes d'ancrage (200, 200', 200") dans une position où ils se jouxtent.

8. Pieu (100) selon la revendication 7, **caractérisé en ce que** le coin (300, 300') présente une section adaptée à permettre son guidage dans le pieu (100), le coin (300, 300') comprenant deux barres (310a, 310b) solidaires terminées respectivement par deux facettes biseautées (312a, 312b), tournées vers le bas et vers l'intérieur du coin (300, 300') pour venir appuyer respectivement, pendant son coulissement, sur les deux talons (230) des deux organes d'ancrage (200, 200', 200").

9. Pieu (100) selon la revendication 8, **caractérisé en ce que** les barres (310a, 310b) comportent respectivement des faces frontales (314a, 314b) qui sont sécantes avec les facettes biseautées (312a, 312b), ces faces frontales (314) permettant, en étant appliquées contre les talons (230) de verrouiller les organes d'ancrage (200) dans leur position d'ancrage, alors que le coin (300, 300') est parvenu dans la partie basse du pieu.

10. Pieu (100) selon l'une quelconque des revendications précédentes, **caractérisé en ce qu'**il est pourvu de plusieurs niveaux de trous (116, 116') et d'organes d'ancrage (200, 200', 200") correspondants.

11. Pieu (100) selon l'une quelconque des revendications précédentes, **caractérisé en ce qu'**il est pourvu d'organes d'ancrage (200") rétractables sous l'effet d'un mouvement d'extraction du coin (300') du pieu (100).

12. Pieu (100) selon la revendication 11, **caractérisé en ce qu'**un repoussoir (250) prolonge de manière oblique la première branche (210) dans une direction opposée à celle de la seconde branche (220), et **en ce que** le coin (300') est pourvu d'un moyen de manoeuvre (320') du repoussoir (250) pour manoeuvrer l'organe d'ancrage (200") vers sa position escamotée.

13. Pieu (100) selon la revendication 12, **caractérisé en ce que** le moyen de manoeuvre est constitué d'une seconde facette biseautée (320') tournée vers le haut et sécante par une arête (313)' avec la facette biseautée (312).

14. Pieu (100) selon la revendication 13, **caractérisé en ce que** la seconde facette biseautée (320') est sécante avec une face latérale (322') de la barre (310) correspondante et **en ce qu'**une rampe (330') est disposée sur chaque face latérale (322') pour agir sur le talon (230) d'un organe d'ancrage (200') d'un niveau supérieur, la rampe (330') étant disposée de manière décalée sur ladite barre (310) pour échapper au repoussoir (250) d'une largeur réduite de cet organe d'ancrage (200"), pendant le mouvement de coulissement du coin (300').

15. Pieu (100) selon l'une quelconque des revendications précédentes, **caractérisé en ce qu'**un séparateur (350) est disposé entre deux organes d'ancrage (200, 200', 200") d'un même niveau pour les guider pendant le mouvement de coulissement du coin (300, 300').

16. Pieu (100) selon l'une quelconque des revendications 11 à 15, **caractérisé en ce qu'**il est pourvu d'un extracteur (500) du coin (300'), l'extracteur (500) étant associé à un moyen d'extraction (550) susceptible de tirer sur l'extracteur (500) afin de faire remonter le coin (300') dans le pieu (100).

17. Pieu (100) selon la revendication 16, **caractérisé en ce que** l'extracteur (500) comprend un tenon (510) solidaire d'une plaque (512) et qui est apte à être engagé par rotation sous deux retours (340a', 340b') du coin (300') prolongeant perpendiculairement et dans des directions parallèles, les extrémités libres des deux barres (310a et 310b).

18. Pieu (100) selon la revendication 17, **caractérisé en ce que** le moyen d'extraction (550) se compose d'une plaque perforée (570) pourvue de butées anti-rotation (572) et qui est destinée à recouvrir l'ouverture (114) du pieu (100), d'une tige filetée (560) susceptible d'être vissée dans l'extracteur (500), d'un écrou (562) correspondant, de butées anti-rotation (564) solidaires de l'extracteur (500) et prévues pour coopérer avec celles de la plaque perforée (570).

19. Pieu (100) selon la revendication 18, **caractérisé en ce que** l'extracteur (500) comprend un profilé métallique (520) boulonné à intervalles (R) réguliers sur la plaque (512), pour pouvoir régler la longueur (L) de l'extracteur (500).

20. Pieu (100) selon l'une quelconque des revendications précédentes, **caractérisé en ce que** l'extrémité (120) du pieu (100) est terminée par une pointe (124) rapportée, fabriquée dans un matériau plus résistant que celui du pieu (100).
